(19) **Europäisches Patentamt**
**European Patent Office**
**Office européen des brevets**

(11) **EP 4 757 338 A1**

(12) **EUROPEAN PATENT APPLICATION**

(43) Date of publication:
**10.06.2026   Bulletin 2026/24**

(21) Application number: **25215920.7**

(22) Date of filing: **14.11.2025**

(51) International Patent Classification (IPC):
**H04N 25/683** $^{(2023.01)}$    **H04N 25/13** $^{(2023.01)}$

(52) Cooperative Patent Classification (CPC):
**H04N 25/683; H04N 25/134**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.12.2024   KR 20240178904**

(71) Applicant: **SK hynix Inc.**
**Bubal-eub**
**Icheon-si Gyeonggi-do 17336 (KR)**

(72) Inventors:
• **JANG, Cheol Jon**
  **17336 Icheon-si, Gyeonggi-do (KR)**
• **KIM, Dong Ik**
  **17336 Icheon-si, Gyeonggi-do (KR)**
• **YANG, Jin Na**
  **17336 Icheon-si, Gyeonggi-do (KR)**
• **CHOI, Jun Hyeok**
  **17336 Icheon-si, Gyeonggi-do (KR)**

(74) Representative: **Isarpatent**
**Patent- und Rechtsanwälte PartG mbB**
**Friedrichstraße 31**
**80801 München (DE)**

(54) **IMAGE SIGNAL PROCESSOR AND METHOD FOR PROCESSING IMAGE SIGNAL**

(57)    An image signal processor includes a defective pixel detector configured to detect a defective pixel from among similar characteristic pixels, the similar characteristic pixels representing pixels having a characteristic same as a characteristic of a target pixel included in a target kernel, a pattern determiner configured to determine a pattern of the target kernel based on pixel data of pixels included in the target kernel when the defective pixel is present, and a pixel interpolator configured to interpolate, when the defective pixel is positioned in a texture area of the pattern, the target pixel based on pixel data of pixels positioned in the texture area among dissimilar characteristic pixels and pixel data of pixels positioned in the texture area among the similar characteristic pixels, the dissimilar characteristic pixels representing pixels having a characteristic different from the characteristic of the target pixel.

FIG.2

**Description**

TECHNICAL FIELD

The embodiments of the present disclosure generally relate to an image signal processor capable of performing image conversion, and a method for processing an image signal.

BACKGROUND

An image sensor is a device for capturing optical images by converting light into electrical signals using a photosensitive semiconductor material which reacts to light. With the development of automotive, medical, computer and communication industries, the demand for high-performance image sensing devices is increasing in various devices such as smartphones, digital cameras, game machines, IOT (Internet of Things), robots, security cameras and medical micro cameras.

A pixel array that directly captures an optical image in an image sensing device may include defective pixels that cannot normally acquire a color image due to process errors. In order to implement an autofocus function, the demand for image sensing devices manufactured such that a pixel array includes phase difference detection pixel(s) is gradually increasing. The phase difference detection pixels capable of acquiring phase-difference related information cannot acquire color images in the same manner as defective pixels, such that the phase difference detection pixels can be treated as defective pixels from the point of view of color images.

**SUMMARY**

Various embodiments of the present disclosure relate to an image signal processor and an image signal processing method that may improve the accuracy of correction of defective pixels and the like.

When a target pixel is a defective pixel, the pixel data of the target pixel may be interpolated based on the pixel data of peripheral pixels. However, some of the peripheral pixels may also be defective pixels. Various embodiments of the present disclosure relate to a method of interpolating the pixel data of the target pixel even when the target pixel and the peripheral pixels are all defective pixels.

In accordance with an embodiment of the present disclosure, an image signal processor may include a defective pixel detector configured to detect a defective pixel from among similar characteristic pixels, the similar characteristic pixels representing pixels having a characteristic same as a characteristic of a target pixel included in a target kernel, a pattern determiner configured to determine a pattern of the target kernel based on pixel data of pixels included in the target kernel when the defective pixel is present, and a pixel interpolator configured to interpolate, when the defective pixel is positioned in a texture area of the pattern, the target pixel based on pixel data of pixels positioned in the texture area among dissimilar characteristic pixels and pixel data of pixels positioned in the texture area among the similar characteristic pixels, the dissimilar characteristic pixels representing pixels having a characteristic different from the characteristic of the target pixel.

In accordance with another embodiment of the present disclosure, an image signal processor may include a pattern determiner configured to determine a pattern of a target kernel including a target pixel based on pixel data of pixels in the target kernel, a pixel interpolator configured to generate, when a similar characteristic defective pixel having a characteristic same as a characteristic of the target pixel is positioned in a texture area of the pattern, dissimilar characteristic pixel data including at least one of a gradient or ratio between dissimilar characteristic pixels positioned in the texture area, the dissimilar characteristic pixels representing pixels having a characteristic different from the characteristic of the target pixel, and a pixel interpolator configured to interpolate the target pixel based on the dissimilar characteristic pixel data.

In accordance with another embodiment of the present disclosure, a method of processing an image signal may include determining a defective pixel from among similar characteristic pixels, the similar characteristic pixels representing pixels having a characteristic same as a characteristic of a target pixel included in a target kernel, determining a pattern of the target kernel based on pixel data of pixels included in the target kernel when the defective pixel is present, and when the defective pixel is positioned in a texture area of the pattern, interpolating the target pixel based on pixel data of pixels positioned in the texture area among dissimilar characteristic pixels and pixel data of pixels positioned in the texture area among the similar characteristic pixels, the dissimilar characteristic pixels representing pixels having a characteristic different from the characteristic of the target pixel.

It is to be understood that both the foregoing general description and the following detailed description of the present disclosure are illustrative and descriptive and are intended to provide further description of the present disclosure as claimed.

**BRIEF DESCRIPTION OF THE DRAWINGS**

The above and other features and beneficial aspects of the embodiments of the present disclosure will become readily apparent with reference to the following detailed description when considered in conjunction with the accompanying drawings.

FIG. 1 is a block diagram illustrating an image signal processor according to embodiments of the present disclosure.
FIG. 2 is a detailed block diagram illustrating the defective pixel corrector shown in FIG. 1.

FIG. 3 is a flowchart illustrating the operation of an image signal processor according to embodiments of the present disclosure.

FIG. 4A is a diagram illustrating a target kernel in which a pixel corresponding to a red filter is positioned at the center.

FIG. 4B is a diagram illustrating the operation of an image signal processor when the pixel positioned at the center of the target kernel corresponds to the red filter according to embodiments of the present disclosure.

FIG. 5A is a diagram illustrating a target kernel in which a pixel corresponding to a green filter is positioned at the center.

FIG. 5B is a diagram illustrating the operation of an image signal processor when the pixel positioned at the center of the target kernel corresponds to the green filter according to embodiments of the present disclosure.

FIG. 6A is a diagram illustrating a target kernel in which a pixel corresponding to a blue filter is positioned at the center.

FIG. 6B is a diagram illustrating the operation of an image signal processor when the pixel positioned at the center of the target kernel corresponds to the blue filter according to embodiments of the present disclosure.

FIG. 7 is a block diagram illustrating a computing device corresponding to the image signal processor of FIG. 1 according to an embodiment of the present disclosure.

## DETAILED DESCRIPTION

The present disclosure provides embodiments of an image signal processor capable of performing image conversion, and a method for processing an image signal that may be used in configurations to substantially address one or more technical or engineering issues and to mitigate limitations or disadvantages encountered in some image signal processors in the art. Some embodiments of the present disclosure relate to an image signal processor and an image signal processing method that may improve the accuracy of correction of defective pixels and the like. Some embodiments of the present disclosure relate to a method of interpolating the pixel data of the target pixel even when the target pixel and the peripheral pixels are all defective pixels. In recognition of the issues above, according to the embodiments of the present disclosure, even when the target pixel and the pixels surrounding the target pixel are defective pixels, the accuracy of correction of the target pixel may be improved by providing criteria for selecting interpolation pixels used to interpolate the pixel data of the target pixel.

Reference will now be made in detail to some embodiments of the present disclosure which are illustrated in the accompanying drawings. Wherever possible, the same reference numbers will be used throughout the drawings to refer to the same or like parts. While the embodiments of the present disclosure are susceptible to various modifications and alternative forms, specific embodiments thereof are shown in the drawings. However, the embodiments should not be construed as being limited to the embodiments set forth herein.

Hereinafter, various embodiments will be described with reference to the accompanying drawings however, it should be understood that the embodiments are not limited to specific embodiments, but include various modifications, equivalents and/or alternatives of the embodiments. The embodiments of the present disclosure may provide a variety of advantageous effects capable of being directly or indirectly recognized by one of ordinary skill in the art.

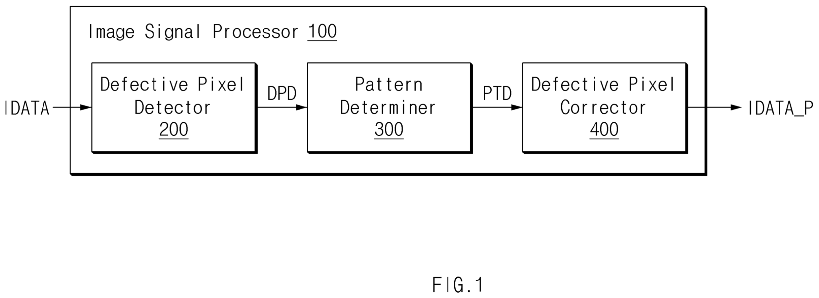

FIG. 1 is a block diagram illustrating an image signal processor 100 according to embodiments of the present disclosure.

Referring to FIG. 1, the image signal processor (ISP) 100 may perform at least one image signal process on image data (IDATA) to generate the processed image data (IDATA_P). The ISP 100 may reduce noise of image data (IDATA), and may perform various kinds of image signal processing (e.g., demosaicing, defect pixel correction, gamma correction, color filter array interpolation, color matrix, color correction, color enhancement, lens distortion correction, etc.) for image-quality improvement of the image data. In addition, the ISP 100 may compress image data that has been created by execution of image signal processing for image-quality improvement, such that the ISP 100 may create an image file using the compressed image data. Alternatively, the ISP 100 may recover image data from the image file. In this case, the scheme for compressing such image data may be a reversible format or an irreversible format. As a representative example of such compression format, in the case of using a still image, Joint Photographic Experts Group (JPEG) format, JPEG 2000 format, or the like may be used. In addition, in the case of using moving images, a plurality of frames may be compressed according to Moving Picture Experts Group (MPEG) standards such that moving image files may be created.

The image data (IDATA) may be generated by an image sensing device that captures an optical image of a scene, but the scope of the present disclosure is not limited thereto. The image sensing device may include a pixel array including a plurality of pixels configured to sense incident light received from a scene, a control circuit configured to control the pixel array, and a readout circuit configured to output digital image data (IDATA) by converting an analog pixel signal received from the pixel array into the digital image data (IDATA). In some embodiments of the present disclosure, the image data (IDATA) may be generated by the image sensing device.

The pixel array of the image sensing device may include defective pixels that cannot normally capture a color image due to process limitations or temporary noise inflow. In addition, the pixel array may include phase difference detection pixels configured to acquire phase difference-related information to implement the autofocus function. The phase difference detection pixels cannot acquire color images in the same manner as defective pixels, such that the phase difference detection pixels may be treated as defective pixels from the point of view of color images. In some embodiments, for convenience of description and better understanding of the present disclosure, the defective pixel and the phase difference detection pixel, each of which cannot normally acquire the color image, will hereinafter be collectively referred to as "defective pixels."

To increase the quality of color images, it is essential to improve the accuracy of correction of defective pixels. To this end, the image signal processor 100 based on some embodiments of the present disclosure may include a defective pixel detector 200, a pattern determiner 300, and a defective pixel corrector 400.

The defective pixel detector 200 may detect the pixel data of a pixel subjected to determination of defects from the image data (IDATA). In the present disclosure, for simplicity, the digital data corresponding to the pixel signal of each pixel will be defined as pixel data, and a set of pixel data of pixels corresponding to a predetermined unit (e.g., frame or kernel) will be defined as image data (IDATA). Here, a frame corresponds to an entire pixel array, and a kernel may represent a unit for image signal processing. In the present disclosure, stating that pixels are "included" in a kernel may mean that the pixels "correspond" to a kernel corresponding to a specific operation unit. The operation of the defective pixel detector 200 may be performed based on the target pixel, which is the pixel to be corrected, and the target kernel that includes the target pixel.

The target pixel may correspond to a pixel determined to be a defective pixel. For example, the target pixel may correspond to a pixel determined to be a defective pixel based on the difference between the pixel data of the target pixel and the pixel data of each pixel included in the target kernel. Alternatively, the target pixel may correspond to a pixel determined to be a defective pixel based on the difference between the pixel data of the target pixel and the average value of the pixel data of the pixels included in the target kernel. Whether the target pixel is a defective pixel may be determined by the defective pixel detector 200, but embodiments are not limited thereto. It may also be determined independently whether the peripheral pixels included in the target kernel are defective pixels.

The defective pixel detector 200 may determine whether each peripheral pixel included in the target kernel is a defective pixel. Here, the peripheral pixels may refer to pixels included in the target kernel, other than the target pixel. The defective pixel detector 200 may determine whether a peripheral pixel is a defective pixel based on the difference in pixel data between the peripheral pixel and another peripheral pixel in the kernel. For example, when the difference in pixel data between a peripheral pixel having the greatest pixel data and a peripheral pixel having the second greatest pixel data in the kernel is greater than or equal to a threshold, the defective pixel detector 200 may determine that the peripheral pixel having the greatest pixel data is a defective pixel that does not have normal pixel data. Alternatively, when the difference in pixel data between a peripheral pixel having the least pixel data and a peripheral pixel having the second least pixel data in the kernel is greater than or equal to the threshold, the defective pixel detector 200 may determine that the peripheral pixel having the least pixel data is a defective pixel. Here, the difference in pixel data may be calculated based on the pixel data of peripheral pixels similar to the target pixel.

The threshold used in the present disclosure may be a preset value or fixed constant, or a specific ratio of the brightness value (e.g., the average value of green) of the target kernel. In one embodiment, the ISP 100 may set the threshold based on the standard deviation of the pixel data corresponding to the pixels positioned in the target kernel. For example, the ISP 100 may set the threshold by comparing the standard deviation of the pixels positioned in the same channel within the target kernel with the pixel data of the pixels positioned in the target kernel. In this disclosure, a channel may refer to relative positions of pixels with reference to the center of a microlens or relative positions of pixels in a pixel arrangement and, in a different view point, may refer to a group of pixels having the same pixel characteristic type, such as a color filter type (e.g., red, green, or blue), the corresponding signal path or processing path for the pixels.

According to one embodiment, the defective pixel detector 200 may determine whether each of the similar characteristic pixels, which are pixels that have the same characteristic as the target pixel among the pixels included in the target kernel, is a defective pixel. That is, similar characteristic pixels refer to pixels having the same characteristic, and the characteristic may include at least one characteristic factor. For example, the characteristic may include at least one characteristic factor of at least one of the color filter or channel corresponding to the pixel.

When the characteristic selectively includes a characteristic factor of one of the color filter or channel corresponding to a pixel, a pixel having the same characteristic as the target pixel may be a pixel corresponding to the same color filter or the same channel as the target pixel. For example, when the target pixel is a pixel corresponding to a red filter, the defective pixel detector 200 may determine whether each of the peripheral pixels included in the target kernel and corresponding to the red filter is a defective pixel.

When the characteristic includes both the color filter and channel corresponding to a pixel as two characteristic factors, a pixel having the same characteristic as the target pixel may be a pixel corresponding to the same color filter and the same channel as the target pixel. For example, when the target pixel corresponds to a red filter and to a first channel among multiple channels, the defective pixel detector 200 may determine whether each of the peripheral pixels included in the target kernel and corresponding to the red filter and the first channel is a defective pixel.

In the present disclosure, a similar characteristic pixel may refer to a pixel having the same characteristic as the target pixel, and a dissimilar characteristic pixel may refer to a pixel having a different characteristic from the target pixel.

In one embodiment, when the characteristic includes multiple characteristic factors, a similar characteristic pixel may be a pixel whose characteristic factors are all the same as those of the target pixel, and a dissimilar characteristic pixel may be a pixel having at least one different characteristic factor from the target pixel.

In another embodiment, when the characteristic includes multiple characteristic factors, a similar characteristic pixel may be a pixel that has at least one characteristic factor the same as that of the target pixel, and a dissimilar characteristic pixel may be a pixel whose characteristic factors are all different from those of the target pixel.

Regarding the target pixel, a pixel that is a similar characteristic pixel and has defective pixel data may correspond to a similar characteristic defective pixel. Also, in the present disclosure, the same channel may refer to positions of pixels whose relative positions from the center of a microlens are the same, or positions of pixels whose relative positions are the same in a specific pattern (e.g., 2×2 matrix, 3×3 matrix) where the pixels are arranged adjacent to each other.

In another embodiment, the defective pixel detector 200 may receive pre-stored position information about defective pixels from the image sensing device that generates image data (IDATA), and determine whether the target pixel is a defective pixel based on the position information about the defective pixels. The image sensing device may store position information about fixed defective pixels in internal storage (e.g., one time programmable (OTP) memory) for process-related reasons and provide the position information about the defective pixels to the ISP 100.

The defective pixel detector 200 may transmit defective pixel data (DPD), which includes the pixel data of a defective pixel determined by the defective pixel detector 200 or a pre-stored defective pixel received from the image sensing device, the position information about the defective pixel, and/or the presence/absence of a defective pixel, to the pattern determiner 300.

The pattern determiner 300 may identify the pixel data of the defective pixel, the position information about the defective pixel, or the presence/absence of a defective pixel. The pattern determiner 300 may determine the pattern of the target kernel based on the pixel data of the pixels included in the target kernel. In one embodiment, the pattern determiner 300 may determine that the pattern of the target kernel based on the pixel data of the pixels included in the target kernel when it is determined, based on the DPD, that there is a defective pixel among the similar characteristic pixels of the target pixel.

For example, the pattern determiner 300 may determine the pattern of the target kernel based on at least one of the data obtained by comparing the pixel data between pixels positioned in the texture area of the pattern or the data obtained by comparing the pixel data between a pixel positioned in the texture area and a pixel positioned outside the texture area. In one embodiment, the pattern may include at least one of a horizontal pattern, a vertical pattern, a slash-direction pattern from the bottom left to the top right, or a backslash-direction pattern from the top left to the bottom right.

A texture refers to a set of similar pixels. For example, an object in a scene that has a uniform color may be recognized as a texture. The boundary of a texture may extend in a specific direction, and the difference between the pixel data inside the boundary and the pixel data outside the boundary may be larger than the differences between pixel data. In this disclosure, a similar pixel of a texture may be regarded as having a different technical meaning from a similar characteristic pixel.

The pattern determiner 300 may transmit pattern data (PTD), which includes the type of the pattern of the target kernel determined by the pattern determiner 300, as well as the pixel data of the defective pixel, the position information about the defective pixel, or presence/absence of a defective pixel, to the defective pixel corrector 400.

The defective pixel corrector 400 may identify the pixel data of the defective pixel, the position information about the defective pixel, or the presence/absence of a defective pixel, or the pattern type based on the PTD. When there is a defective pixel among the similar characteristic pixels positioned in the texture area of the pattern, the defective pixel corrector 400 may interpolate the target pixel based on the pixel data of dissimilar characteristic pixels, which are pixels having a characteristic different from that of the target pixel.

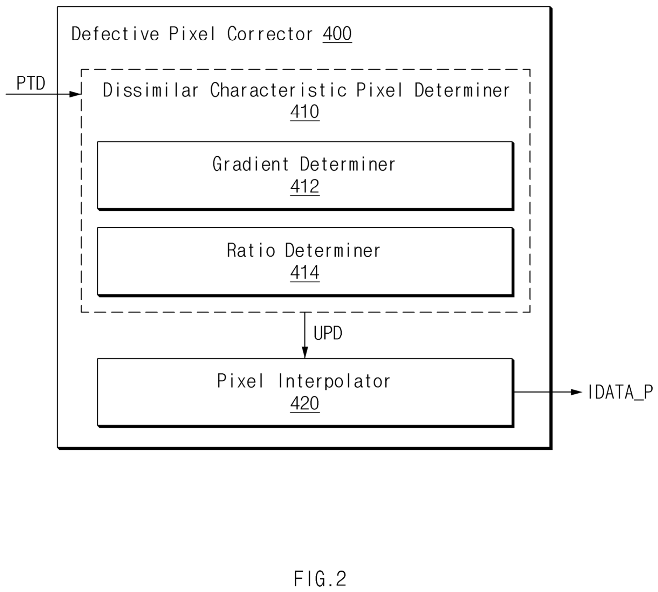

The defective pixel corrector 400 may generate processed image data (IDATA_P) by interpolating the target pixel based on the image data (IDATA). Detailed descriptions of the operation of the defective pixel corrector 400 will be provided later with reference to FIG. 2.

The detailed configuration of the ISP 100 and information transmission according to the configuration illustrated in FIG. 1 are one embodiment and other configurations and information transmission may be used in other embodiments. The detailed configuration of the ISP 100 and information transmission according to the configuration are not limited by the present disclosure. For example, the defective pixel detector 200 and the pattern determiner 300 may be constituted as a single module. Additionally, for example, the defective pixel detector 200 may transmit defective pixel data (DPD) to the defective pixel corrector 400.

FIG. 2 is a detailed block diagram illustrating the defective pixel corrector shown in FIG. 1.

Referring to FIG. 2, the defective pixel corrector 400 may include a dissimilar characteristic pixel determiner 410 and a pixel interpolator 420.

The dissimilar characteristic pixel determiner 410 may include at least one of a gradient determiner 412 or a ratio determiner 414. Based on the PTD, the dissimilar characteristic pixel determiner 410 may detect the pixel data of dissimilar characteristic pixels positioned in the texture area of a pattern determined as a pattern corresponding to the target kernel. For example, referring to FIG. 1, when the pattern determiner 300 determines that the pattern of the target kernel corresponds to a horizontal pattern, the dissimilar characteristic pixel determiner 410 may detect the pixel data of the dissimilar characteristic pixels positioned in the texture area of the horizontal pattern within the target kernel.

The gradient determiner 412 may determine the gradient of pixel data between dissimilar characteristic pixels positioned in the texture area of the pattern. For example, the gradient determiner 412 may calculate the difference in pixel data between a dissimilar characteristic pixel adjacent to a pixel positioned symmetrical to a similar characteristic defective pixel with respect to the target pixel, and a dissimilar characteristic pixel adjacent to the target pixel, among the dissimilar characteristic pixels positioned in the texture area of the pattern.

The ratio determiner 414 may determine the ratio of the pixel data of the dissimilar characteristic pixels positioned in the texture area of the pattern. For example, the ratio determiner 414 may calculate the value obtained by dividing the pixel data of a dissimilar characteristic pixel adjacent to a pixel positioned symmetrical to the similar characteristic defective pixel with respect to the target pixel, by the pixel data of a dissimilar characteristic pixel adjacent to the target pixel.

The dissimilar characteristic pixel determiner 410 may transmit dissimilar characteristic pixel data (UPD), including at least one of the pixel data gradient or ratio between dissimilar characteristic pixels positioned in the texture area of the pattern as determined by the gradient determiner 412 or the ratio determiner 414, to the pixel interpolator 420.

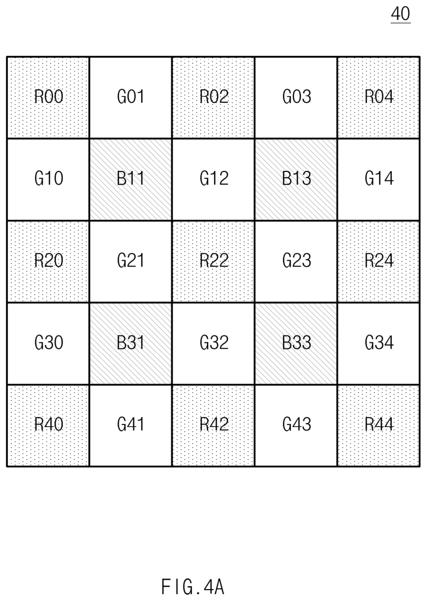

The pixel interpolator 420 may interpolate the pixel data of the target pixel based on the dissimilar characteristic pixel data (UPD). A more detailed description of the operation of the pixel interpolator interpolating the target pixel will be provided later with reference to FIGS. 4A to 6B.

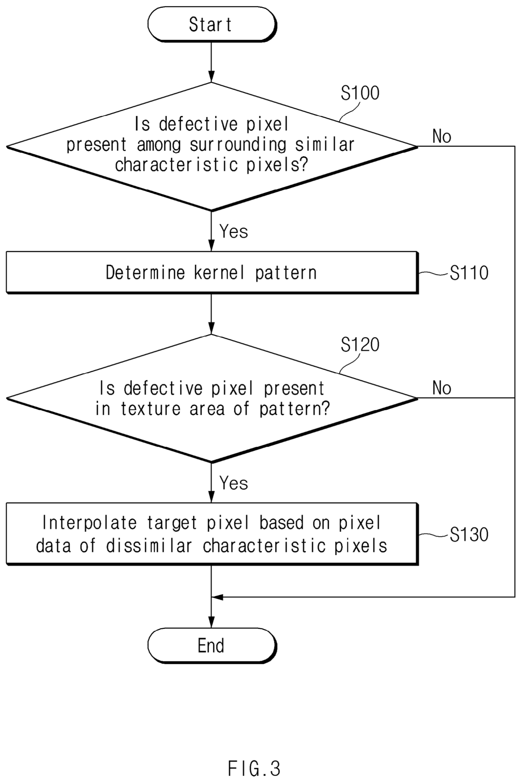

FIG. 3 is a flowchart illustrating the operation of an image signal processor according to embodiments of the present disclosure.

Referring to FIGS. 1 to 3, the defective pixel detector 200 may determine whether a defective pixel is present among the similar characteristic pixels positioned around a target pixel (S 100). When the difference in pixel data between a pixel having the greatest pixel data and a pixel having the second greatest pixel data among the similar characteristic pixels is greater than or equal to a threshold, the defective pixel detector 200 may determine the pixel having the greatest pixel data as a defective pixel. Alternatively, when the difference in pixel data between a pixel having the least pixel data and a pixel having the second least pixel data among the similar characteristic pixels is greater than or equal to a threshold, the pixel having the least pixel data may be determined to be a defective pixel.

When it is determined that there is a defective pixel among the similar characteristic pixels positioned around the target pixel (Yes in S100), the pattern determiner 300 may determine the pattern of the target kernel based on the pixel data of the pixels included in the target kernel (S110). The pattern determiner 300 may determine the pattern of the target kernel based on at least one of the data obtained by comparing the pixel data between pixels positioned in the texture area of the pattern or the data obtained by comparing the pixel data between a pixel positioned in the texture area and a pixel positioned outside the texture area.

When it is determined that no defective pixel is present among the similar characteristic pixels around the target pixel (No in S100), the ISP 100 may determine that interpolation of the pixel data of the target pixel based on the pixel data of the dissimilar characteristic pixels is unnecessary and may terminate the process. In one embodiment, when it is determined that no defective pixel is present among the similar characteristic pixels around the target pixel (No in S100), the ISP 100 may interpolate the pixel data of the target pixel based on the pixel data of similar characteristic pixels.

In one embodiment, the operation of determining whether a defective pixel is present among the similar characteristic pixels positioned around the target pixel may be performed by the defective pixel detector 200. For example, based on the determination of the presence/absence of a defective pixel among the similar characteristic pixels positioned around the target pixel by the defective pixel detector 200, the defective pixel detector 200 may transmit defective pixel data (DPD) to the pattern determiner 300.

In another embodiment, the operation of determining whether a defective pixel is present among the similar characteristic pixels positioned around the target pixel may be performed by the pattern determiner 300. For example, based on the DPD, the pattern determiner 300 may determine whether a defective pixel is present among the similar characteristic pixels positioned around the target pixel. Additionally, when a defective pixel is present, the pattern determiner 300 may initiate the operation of determining the pattern of the target kernel.

The defective pixel corrector 400 may determine whether a defective pixel is present in the texture area of the pattern (S120). The defective pixel corrector 400 may determine whether the similar characteristic defective pixel determined to be the defective pixel in operation S100 is included in the texture area of the pattern as determined in operation S110.

When it is determined that the defective pixel is present in the texture area of the pattern (Yes in S120), the pixel interpolator 420 may interpolate the target pixel based on the pixel data of dissimilar characteristic pixels (S130). The pixel interpolator 420 may interpolate the target pixel based on the pixel data of the dissimilar characteristic pixels positioned in the texture area and the pixel data of the similar characteristic pixels positioned in the texture area.

When it is determined that no defective pixel is present in the texture area of the pattern (No in S 120), the ISP 100 may determine that interpolation of the pixel data of the target pixel based on the dissimilar characteristic pixels is unnecessary and may terminate the process. In one embodiment, when it is determined that no defective pixel is present in the texture area of the pattern (No in S120), the ISP 100 may interpolate the pixel data of the target pixel based on the pixel data of similar characteristic pixels.

In one embodiment, the operation of determining whether a defective pixel is present in the texture area of the pattern may be performed by the pattern determiner 300. For example, based on the determination of the presence/absence of a defective pixel in the texture area of the pattern, the pattern determiner 300 may transmit pattern data (PTD) to the defective pixel corrector 400.

In another embodiment, the operation of determining whether a defective pixel is present in the texture area of the pattern may be performed by the defective pixel corrector 400. For example, based on at least one of the DPD or the PTD, the defective pixel corrector 400 may determine whether a defective pixel is present in the texture area of the pattern. When a defective pixel is present in the texture area, the defective pixel corrector 400 may initiate the interpolation of the target pixel.

FIG. 4A is a diagram illustrating a target kernel in which a pixel corresponding to a red filter is positioned at the center.

Referring to FIGS. 1, 2, and 4A, a target kernel 40 may include red pixels corresponding to a red filter, green pixels corresponding to a green filter, and blue pixels corresponding to a blue filter. The target kernel 40 may have red, green, and blue pixels arranged in an array of the Bayer pattern. The red pixels may detect red light and generate red pixel data, the green pixels may detect green light and generate green pixel data, and the blue pixels may detect blue light and generate blue pixel data. Each of the red, green, and blue pixel data ranges from 0 to 1023.

Hereinafter, a description will be provided based on a kernel arranged in a Bayer pattern. However, the technical idea of the present disclosure may also be applied to kernels having pixels arranged in other patterns, such as a quad Bayer pattern, in which same-color pixels arranged in a 2x2 matrix form a Bayer pattern, a nona Bayer pattern, in which same-color pixels arranged in a 3x3 matrix form a Bayer pattern, a QxQ pattern (or hexa Bayer pattern), in which same-color pixels arranged in a 4x4 matrix form a Bayer pattern, an RGBW pattern, in which one green pixel in the Bayer pattern is replaced with a white pixel, a Quad All 2PD pattern or Quad All 4-coupled PD pattern, in which multiple (2 or 4) same-color pixels in the quad Bayer pattern correspond to a single microlens, a Half-shield PD pattern, in which a light-blocking layer is placed on some green pixels in the Bayer pattern, a Paired PD pattern, in which green pixels are arranged adjacent to each other in the Bayer pattern such that a single microlens correspond to the adjacent green pixels, or a monochrome pattern, in which pixels without color filters are arranged.

For example, for the Quad All 4-coupled PD pattern, when the characteristic includes a color filter and a channel as characteristic factors, a similar characteristic pixel for a target pixel arranged at the upper left of a 2x2 matrix composed of green pixels (i.e., the position where the first row and first column of the matrix intersect) may correspond to a pixel arranged at the upper left of another 2x2 matrix composed of green pixels (i.e., the position where the first row and first column of the matrix intersect).

Additionally, depending on the performance of the ISP 100, the required correction accuracy, and the arrangement of color pixels, a kernel of a different size (e.g., 10x10 kernel) than the 5x5 kernel may be used.

In the present disclosure, the defective pixel correction is performed by the ISP 100 in units of a 5x5 kernel, which has 5 rows and 5 columns. The characteristics and relative positions of the pixels included in the target kernel 40 are described according to the rows, columns, and color filters of the pixels. For example, the center of the target kernel 40 may be occupied by the red pixel R22.

The target pixel may be positioned at the center of the target kernel 40. In one embodiment, the target kernel 40 may include the target pixel, which is red pixel R22, at the center. In this case, the similar characteristic pixels, namely pixels having the same characteristic as the target pixel included in the target kernel 40, may correspond to red pixels R00, R02, R04, R20, R24, R40, R42, and R44. The green and blue pixels included in the target kernel 40 may correspond to dissimilar characteristic pixels.

Accordingly, for the target kernel 40, the defective pixel detector 200 may determine whether each of the similar characteristic pixels, namely red pixels R00, R02, R04, R20, R24, R40, R42, and R44, is a defective pixel. Pixels determined as similar characteristic pixels by the defective pixel detector 200 may correspond to similar characteristic defective pixels.

Also, for the target kernel 40, the pixel interpolator 420 may interpolate the target pixel based on the pixel data of at least one of the dissimilar characteristic pixels, i.e., green pixels G01, G03, G10, G12, G14, G21, G23, G30, G32, G34, G41, and G43, and blue pixels B11, B13, B31, and B33.

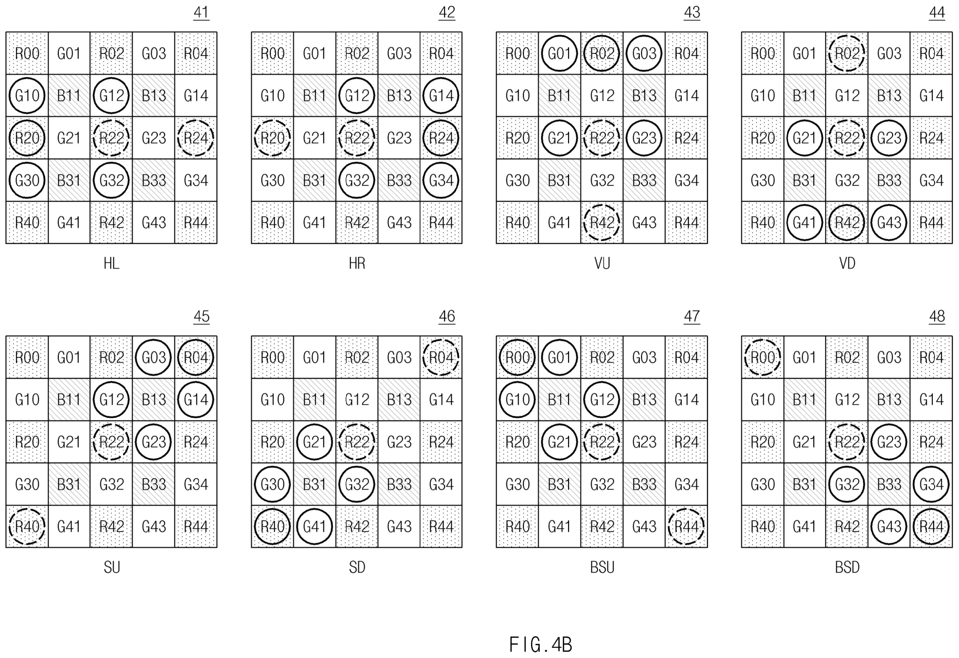

FIG. 4B is a diagram illustrating the operation of an image signal processor when the pixel positioned at the center of the target kernel corresponds to the red filter according to embodiments of the present disclosure.

Referring to FIGS. 1, 2, and 4B, the pixel interpolator 420 may interpolate the target pixel based on a horizontal left (HL) target kernel 41, horizontal right (HR) target kernel 42, vertical up (VU) target kernel 43, vertical down (VD) target kernel 44, slash up (SU) target kernel 45, slash down (SD) target kernel 46, back-slash up (BSU) target kernel 47, or back-slash down (BSD) target kernel 48.

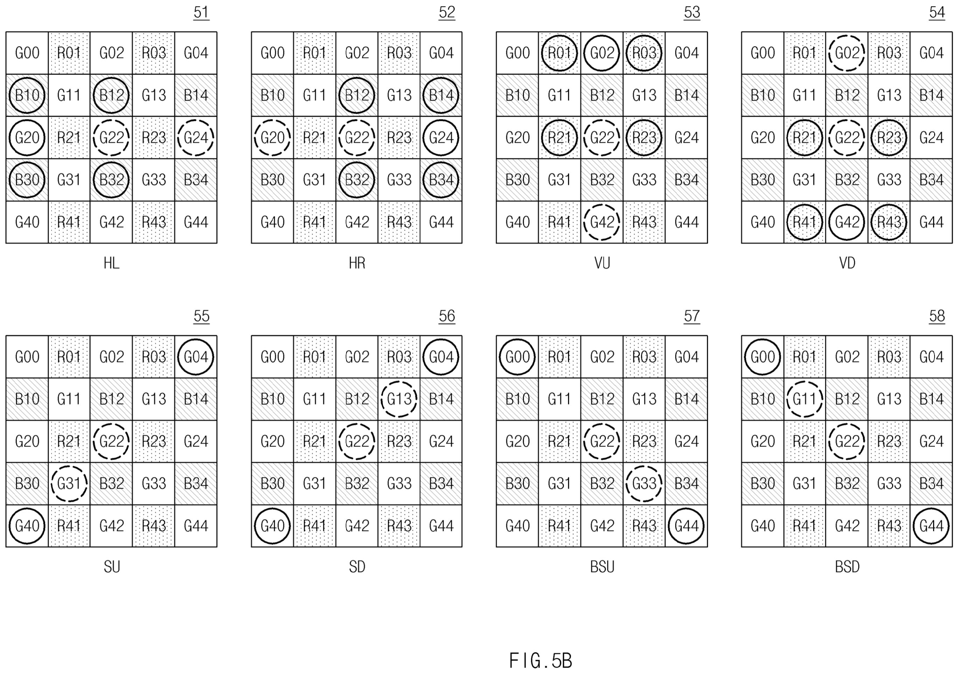

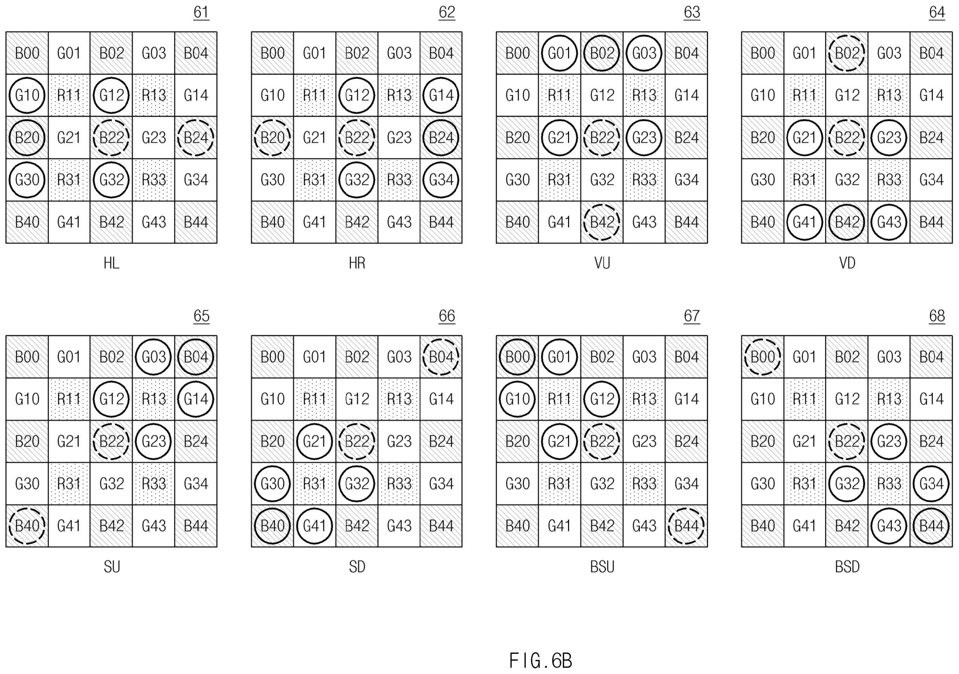

The HL target kernel 41 and HR target kernel 42 may correspond to the case where the pattern determiner 300 determines the target kernel as a horizontal pattern. For example, in HL target kernel 41 and HR target kernel 42, the area corresponding to the pixels in the second to fourth rows of the kernel may be the texture area. The pattern and texture area of the target kernel may also be interpreted similarly in FIGS. 5B and 6B described below.

The VU target kernel 43 and VD target kernel 44 may correspond to the case where the pattern determiner 300 determines the target kernel as a vertical pattern. For example, in the VU target kernel 43 and VD target kernel 44, the area corresponding to the pixels positioned in the second to fourth columns of the kernel may be the texture area. The pattern and texture area of the target kernel may also be interpreted similarly in FIGS. 5B and 6B described below.

The SU target kernel 45 and SD target kernel 46 may correspond to the case where the pattern determiner 300 determines the target kernel as a slash-direction pattern. For example, in the SU target kernel 45 and SD target kernel 46, the area corresponding to green pixel G03, red pixel R04, green pixel G12, blue pixel B13, green pixel G14, green pixel G21, red pixel R22, green pixel G23, green pixel G30, blue pixel B31, green pixel G32, red pixel R40, and green pixel G41 may be the texture area. The pattern and texture area of the target kernel may also be interpreted similarly in FIGS. 5B and 6B described below.

The BSU target kernel 47 and BSD target kernel 48 may correspond to the case where the pattern determiner 300 determines the target kernel as a backslash-direction pattern. For example, in the BSU target kernel 47 and BSD target kernel 48, the area corresponding to red pixel R00, green pixel G01, green pixel G10, blue pixel B11, green pixel G12, green pixel G21, red pixel R22, green pixel G23, green pixel G32, blue pixel B33, green pixel G34, green pixel G43, and red pixel R44 may be the texture area. The pattern and texture area may also be interpreted similarly in FIGS. 5B and 6B described below.

When the target pixel corresponds to the red filter, the similar characteristic defective pixel is positioned to the right of the target pixel, and the pattern determiner 300 determines the target kernel as a horizontal pattern, the pixel interpolator 420 may interpolate the target pixel with the reference to the HL target kernel 41.

The HL target kernel 41 may include red pixel R22 as the target pixel, and correspond to a horizontal pattern. The HL target kernel 41 may correspond to a target kernel including red pixel R24 as a similar characteristic defective pixel. Since the similar characteristic defective pixel is positioned to the right of the target pixel in the HL target kernel 41, the pixel interpolator 420 may interpolate the target pixel based on the pixel data of similar or dissimilar characteristic pixels positioned at the left part of the HL target kernel 41 in the horizontal direction.

In the HL target kernel 41, the pixel marked with a dashed circle may correspond to the defective pixel, and the pixels marked with solid circles may correspond to pixels used to interpolate the target pixel. When the pixel interpolator 420 interpolates the target pixel with reference to the HL target kernel 41, the pixel data of the target pixel may be calculated using an equation such as Equation 1 or Equation 2 below.

In Equation 1 or Equation 2, the pixel data of the interpolated target pixel may correspond to r22, and the pixel data of a similar characteristic pixel R20 may correspond to r20. Also, the pixel data of dissimilar characteristic pixels G10, G12, G30, and G32 may correspond to g10, g12, g30, and g32, respectively. Also, in the equation, G1 may correspond to a value obtained by dividing the average pixel data of the red pixels included in the HL target kernel 41 by the average pixel data of the green pixels included in the HL target kernel 41. In one embodiment, G1 may be any set value or a preset threshold.

[Equation 1]

$$r22 = r20 + G1 \times \{(g12 + g32) - (g10 + g30)\} / 2$$

[Equation 2]

$$r22 = r20 \times G1 \times \{(g12 + g32) / (g10 + g30)\}$$

In one embodiment, the difference between the dissimilar characteristic pixel data in Equation 1 may be determined by the gradient determiner 412, and the ratio between the dissimilar characteristic pixel data in Equation 2 may be determined by the ratio determiner 414. The difference or ratio between the dissimilar characteristic pixel data described in the equations presented below may be understood in a similar way.

When the target pixel corresponds to the red filter, the similar characteristic defective pixel is positioned to the left of the target pixel, and the pattern determiner 300 determines the target kernel as a horizontal pattern, the pixel interpolator 420 may interpolate the target pixel with the reference to the HR target kernel 42.

The HR target kernel 42 may include red pixel R22 as the target pixel, and correspond to a horizontal pattern. The HR target kernel 42 may correspond to a target kernel including red pixel R20 as a similar characteristic defective pixel. Since the similar characteristic defective pixel is positioned to the left of the target pixel in the HR target kernel 42, the pixel interpolator 420 may interpolate the target pixel based on the pixel data of similar or dissimilar characteristic pixels positioned at the right part of the HR target kernel 42 in the horizontal direction.

In the HR target kernel 42, the pixel marked with a dashed circle may correspond to the defective pixel, and the pixels marked with solid circles may correspond to pixels used to interpolate the target pixel. When the pixel interpolator 420 interpolates the target pixel with reference to the HR target kernel 42, the pixel data of the target pixel may be calculated using an equation such as Equation 3 or Equation 4 below.

In Equation 3 or Equation 4, the pixel data of the interpolated target pixel may correspond to r22, and the pixel data of a similar characteristic pixel R24 may correspond to r24. Also, the pixel data of dissimilar characteristic pixels G12, G14, G32, and G34 may correspond to g12, g14, g32, and g34, respectively. Also, in the equation, G1 may correspond to a value obtained by dividing the average pixel data of the red pixels included in the HR target kernel 42 by the average pixel data of the green pixels included in the HR target kernel 42. In one embodiment, G1 may be any set value or a preset threshold.

[Equation 3]

$$r22 = r24 + G1 \times \{(g12 + g32) - (g14 + g34)\} / 2$$

[Equation 4]

$$r22 = r24 \times G1 \times \{(g12 + g32) / (g14 + g34)\}$$

When the target pixel corresponds to the red filter, the similar characteristic defective pixel is positioned under the target pixel, and the pattern determiner 300 determines the target kernel as a vertical pattern, the pixel interpolator 420 may interpolate the target pixel with the reference to the VU target kernel 43.

The VU target kernel 43 may include red pixel R22 as the target pixel, and correspond to a vertical pattern. The VU target kernel 43 may correspond to a target kernel including red pixel R42 as a similar characteristic defective pixel. Since the similar characteristic defective pixel is positioned under the target pixel in the VU target kernel 43, the pixel interpolator 420 may interpolate the target pixel based on the pixel data of similar or dissimilar characteristic pixels positioned at the upper part of the VU target kernel 43 in the vertical direction.

In the VU target kernel 43, the pixel marked with a dashed circle may correspond to the defective pixel, and the pixels marked with solid circles may correspond to pixels used to interpolate the target pixel. When the pixel interpolator 420 interpolates the target pixel with reference to the VU target kernel 43, the pixel data of the target pixel may be calculated using an equation such as Equation 5 or Equation 6 below.

In Equation 5 or Equation 6, the pixel data of the interpolated target pixel may correspond to r22, and the pixel data of a similar characteristic pixel R02 may correspond to r02. Also, the pixel data of dissimilar characteristic pixels G01, G03, G21, and G23 may correspond to g01, g03, g21, and g23, respectively. Also, in the equation, G1 may correspond to a value obtained by dividing the average pixel data of the red pixels included in the VU target kernel 43 by the average pixel data of the green pixels included in the VU target kernel 43. In one embodiment, G1 may be any set value or a preset threshold.

[Equation 5]

$$r22 = r02 + G1 \times \{(g21 + g23) - (g01 + g03)\} / 2$$

[Equation 6]

$$r22 = r02 \times G1 \times \{(g21 + g23) / (g01 + g03)\}$$

When the target pixel corresponds to the red filter, the similar characteristic defective pixel is positioned over the target pixel, and the pattern determiner 300 determines the target kernel as a vertical pattern, the pixel interpolator 420 may interpolate the target pixel with reference to the VD target kernel 44.

The VD target kernel 44 may include red pixel R22 as the target pixel, and correspond to a vertical pattern. The VD target kernel 44 may correspond to a target kernel including red pixel R02 as a similar characteristic defective pixel. Since the similar characteristic defective pixel is positioned over the target pixel in the VD target kernel 44, the pixel interpolator 420 may interpolate the target pixel based on the pixel data of similar or dissimilar characteristic pixels positioned at the lower part of the VD target kernel 44 in the vertical direction.

In the VD target kernel 44, the pixel marked with a dashed circle may correspond to the defective pixel, and the pixels marked with solid circles may correspond to pixels used to interpolate the target pixel. When the pixel interpolator 420 interpolates the target pixel with reference to the VD target kernel 44, the pixel data of the target pixel may be calculated using an equation such as Equation 7 or Equation 8 below.

In Equation 7 or Equation 8, the pixel data of the interpolated target pixel may correspond to r22, and the pixel data of a similar characteristic pixel R42 may correspond to r42. Also, the pixel data of dissimilar characteristic pixels G21, G23, G41, and G43 may correspond to g21, g23, g41, and g43, respectively. Also, in the equation, G1 may correspond to a value obtained by dividing the average pixel data of the red pixels included in the VD target kernel 44 by the average pixel data of the green pixels included in the VD target kernel 44. In one embodiment, G1 may be any set value or a preset threshold.

[Equation 7]

$$r22 = r42 + G1 \times \{(g21 + g23) - (g41 + g43)\} / 2$$

[Equation 8]

$$r22 = r42 \times G1 \times \{(g21 + g23) / (g41 + g43)\}$$

When the target pixel corresponds to the red filter, the similar characteristic defective pixel is positioned at the bottom left with respect to the target pixel, and the pattern determiner 300 determines the target kernel as a slash-direction pattern, the pixel interpolator 420 may interpolate the target pixel with the reference to the SU target kernel 45.

The SU target kernel 45 may include red pixel R22 as the target pixel, and correspond to a slash-direction pattern. The SU target kernel 45 may correspond to a target kernel including red pixel R40 as a similar characteristic defective pixel. Since the similar characteristic defective pixel is positioned at the bottom left with respect to the target pixel in the SU target kernel 45, the pixel interpolator 420 may interpolate the target pixel based on the pixel data of similar or dissimilar characteristic pixels positioned at the upper part of the SU target kernel 45 in the slash direction.

In the SU target kernel 45, the pixel marked with a dashed circle may correspond to the defective pixel, and the pixels marked with solid circles may correspond to pixels used to interpolate the target pixel. When the pixel interpolator 420 interpolates the target pixel with reference to the SU target kernel 45, the pixel data of the target pixel may be calculated using an equation such as Equation 9 or Equation 10 below.

In Equation 9 or Equation 10, the pixel data of the interpolated target pixel may correspond to r22, and the pixel data of a similar characteristic pixel R04 may correspond to r04. Also, the pixel data of dissimilar characteristic pixels G12, G23, G03, and G14 may correspond to g12, g23, g03, and g14, respectively. Also, in the equation, G1 may correspond to a value obtained by dividing the average pixel data of the red pixels included in the SU target kernel 45 by the average pixel data of the green pixels included in the SU target kernel 45. In one embodiment, G1 may be any set value or a preset threshold.

[Equation 9]

$$r22 = r04 + G1 \times \{(g12 + g23) - (g03 + g14)\} / 2$$

[Equation 10]

$$r22 = r04 \times G1 \times \{(g12 + g23) / (g03 + g14)\}$$

When the target pixel corresponds to the red filter, the similar characteristic defective pixel is positioned at the top right with respect to the target pixel, and the pattern determiner 300 determines the target kernel as a slash-direction pattern, the pixel interpolator 420 may interpolate the target pixel with the reference to the SD target kernel 46.

The SD target kernel 46 may include red pixel R22 as the target pixel, and correspond to a slash-direction pattern. The SD target kernel 46 may correspond to a target kernel including red pixel R04 as a similar characteristic defective pixel. Since the similar characteristic defective pixel is positioned at the top right with respect to the target pixel in the SD target kernel 46, the pixel interpolator 420 may interpolate the target pixel based on the pixel data of similar or dissimilar characteristic pixels positioned at the lower part of the SD target kernel 46 in the slash direction.

In the SD target kernel 46, the pixel marked with a dashed circle may correspond to the defective pixel, and the pixels marked with solid circles may correspond to pixels used to interpolate the target pixel. When the pixel interpolator 420 interpolates the target pixel with reference to the SD target kernel 46, the pixel data of the target pixel may be calculated using an equation such as Equation 11 or Equation 12 below.

In Equation 11 or Equation 12, the pixel data of the interpolated target pixel may correspond to r22, and the pixel data of a similar characteristic pixel R40 may correspond to r40. Also, the pixel data of dissimilar characteristic pixels G21, G32, G30, and G41 may correspond to g21, g32, g30, and g41, respectively. Also, in the equation, G1 may correspond to a value obtained by dividing the average pixel data of the red pixels included in the SD target kernel 46 by the average pixel data of the green pixels included in the SD target kernel 46. In one embodiment, G1 may be any set value or a preset threshold.

[Equation 11]

$$r22 = r40 + G1 \times \{(g21 + g32) - (g30 + g41)\} / 2$$

[Equation 12]

$$r22 = r40 \times G1 \times \{(g21 + g32) / (g30 + g41)\}$$

When the target pixel corresponds to the red filter, the similar characteristic defective pixel is positioned at the bottom right with respect to the target pixel, and the pattern determiner 300 determines the target kernel as a backslash-direction pattern, the pixel interpolator 420 may interpolate the target pixel with the reference to the BSU target kernel 47.

The BSU target kernel 47 may include red pixel R22 as the target pixel, and correspond to a backslash-direction pattern. The BSU target kernel 47 may correspond to a target kernel including red pixel R44 as a similar characteristic defective pixel. Since the similar characteristic defective pixel is positioned at the bottom right with respect to the target pixel in the BSU target kernel 47, the pixel interpolator 420 may interpolate the target pixel based on the pixel data of similar or dissimilar characteristic pixels positioned at the upper part of the BSU target kernel 47 in the backslash direction.

In the BSU target kernel 47, the pixel marked with a dashed circle may correspond to the defective pixel, and the pixels marked with solid circles may correspond to pixels used to interpolate the target pixel. When the pixel interpolator 420 interpolates the target pixel with reference to the BSU target kernel 47, the pixel data of the target pixel may be calculated using an equation such as Equation 13 or Equation 14 below.

In Equation 13 or Equation 14, the pixel data of the interpolated target pixel may correspond to r22, and the pixel data of a similar characteristic pixel R00 may correspond to r00. Also, the pixel data of dissimilar characteristic pixels G01, G10, G12, and G21 may correspond to g01, g10, g12, and g21, respectively. Also, in the equation, G1 may correspond to a value obtained by dividing the average pixel data of the red pixels included in the BSU target kernel 47 by the average pixel data of the green pixels included in the BSU target kernel 47. In one embodiment, G1 may be any set value or a preset threshold.

[Equation 13]

$$r22 = r00 + G1 \times \{(g12 + g21) - (g01 + g10)\} / 2$$

[Equation 14]

$$r22 = r00 \times G1 \times \{(g12 + g21) / (g01 + g10)\}$$

When the target pixel corresponds to the red filter, the similar characteristic defective pixel is positioned at the top left with respect to the target pixel, and the pattern determiner 300 determines the target kernel as a backslash-direction pattern, the pixel interpolator 420 may interpolate the target pixel with the reference to the BSD target kernel 48.

The BSD target kernel 48 may include red pixel R22 as the target pixel, and correspond to a backslash-direction pattern. The BSD target kernel 48 may correspond to a target kernel including red pixel R00 as a similar characteristic defective pixel. Since the similar characteristic defective pixel is positioned at the top left with respect to the target pixel in the BSD target kernel 48, the pixel interpolator 420 may interpolate the target pixel based on the pixel data of similar or dissimilar characteristic pixels positioned at the lower part of the BSD target kernel 48 in the backslash direction.

In the BSD target kernel 48, the pixel marked with a dashed circle may correspond to the defective pixel, and the pixels marked with solid circles may correspond to pixels used to interpolate the target pixel. When the pixel interpolator 420 interpolates the target pixel with reference to the BSD target kernel 48, the pixel data of the target pixel may be calculated using an equation such as Equation 15 or Equation 16 below.

In Equation 15 or Equation 16, the pixel data of the interpolated target pixel may correspond to r22, and the pixel data of a similar characteristic pixel R44 may correspond to r44. Also, the pixel data of dissimilar characteristic pixels G23, G32, G34, and G44 may correspond to g23, g32, g34, and g44, respectively. Also, in the equation, G1 may correspond to a value obtained by dividing the average pixel data of the red pixels included in the BSD target kernel 48 by the average pixel data of the green pixels included in the BSD target kernel 48. In one embodiment, G1 may be any set value or a preset threshold.

[Equation 15]

$$r22 = r44 + G1 \times \{(g23 + g32) - (g34 + g43)\} / 2$$

[Equation 16]

$$r22 = r44 \times G1 \times \{(g23 + g32) / (g34 + g43)\}$$

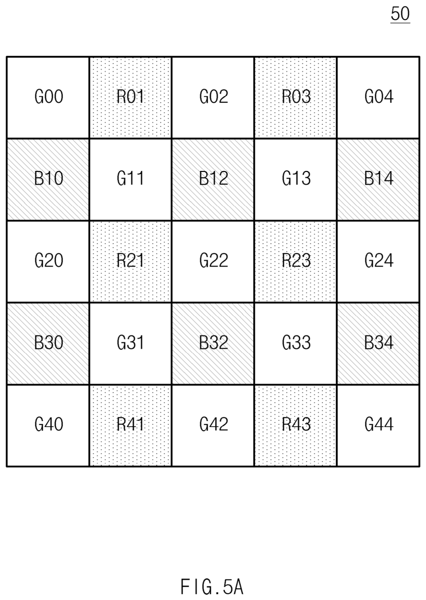

FIG. 5A is a diagram illustrating a target kernel in which a pixel corresponding to a green filter is positioned at the center.

Referring to FIGS. 1, 2, and 5A, the target pixel may be positioned at the center of the target kernel 50. In one embodiment, the target kernel 50 may include the target pixel, which is green pixel G22, at the center. In this case, similar characteristic pixels, namely pixels having the same characteristic as the target pixel included in the target kernel 50, may correspond to green pixels G00, G02, G04, G11, G13, G20, G22, G24, G31, G33, G40, G42, and G44. The red and blue pixels included in the target kernel 50 may correspond to dissimilar characteristic pixels.

Accordingly, for the target kernel 50, the defective pixel detector 200 may determine whether each of the similar characteristic pixels, namely green pixels G00, G02, G04, G11, G13, G20, G22, G24, G31, G33, G40, G42, and G44, is a defective pixel. Pixels determined as similar characteristic pixels by the defective pixel detector 200 may correspond to similar characteristic defective pixels.

Also, for the target kernel 50, the pixel interpolator 420 may interpolate the target pixel based on the pixel data of at least one of the dissimilar characteristic pixels, namely red pixels R01, R03, R21, R23, R41, and R43, and blue pixels B10, B12, B14, B30, B32, and B34.

FIG. 5B is a diagram illustrating the operation of an image signal processor when the pixel positioned at the center of the target kernel corresponds to the green filter according to embodiments of the present disclosure.

Referring to FIGS. 1, 2, and 5B, when the target pixel corresponds to the green filter, the similar characteristic defective pixel is positioned to the right of the target pixel, and the pattern determiner 300 determines the target kernel as a horizontal pattern, the pixel interpolator 420 may interpolate the target pixel with the reference to the HL target kernel 51.

The HL target kernel 51 may include green pixel G22 as the target pixel, and correspond to a horizontal pattern. The HL target kernel 51 may correspond to a target kernel including green pixel G24 as a similar characteristic defective pixel. Since the similar characteristic defective pixel is positioned to the right of the target pixel in the HL target kernel 51, the pixel interpolator 420 may interpolate the target pixel based on the pixel data of similar or dissimilar characteristic pixels positioned at the left part of the HL target kernel 51 in the horizontal direction.

In the HL target kernel 51, the pixel marked with a dashed circle may correspond to the defective pixel, and the pixels marked with solid circles may correspond to pixels used to interpolate the target pixel. When the pixel interpolator 420 interpolates the target pixel with reference to the HL target kernel 51, the pixel data of the target pixel may be calculated using an equation such as Equation 17 or Equation 18 below.

In Equation 17 or Equation 18, the pixel data of the interpolated target pixel may correspond to g22, and the pixel data of a similar characteristic pixel G20 may correspond to g20. Also, the pixel data of dissimilar characteristic pixels B10, B12, B30, and B32 may correspond to b10, b12, b30, and b32, respectively. Also, in the equation, G2 may correspond to a value obtained by dividing the average pixel data of the green pixels included in the HL target kernel 51 by the average pixel data of the blue pixels included in the HL target kernel 51. In one embodiment, G2 may be any set value or a preset threshold.

[Equation 17]

$$g22 = g20 + G2 \times \{(b12 + b32) - (b10 + b30)\} / 2$$

[Equation 18]

$$g22 = g20 \times G2 \times \{(b12 + b32) / (b10 + b30)\}$$

When the target pixel corresponds to the green filter, the similar characteristic defective pixel is positioned to the left of the target pixel, and the pattern determiner 300 determines the target kernel as a horizontal pattern, the pixel interpolator 420 may interpolate the target pixel with the reference to the HR target kernel 52.

The HR target kernel 52 may include green pixel G22 as the target pixel, and correspond to a horizontal pattern. The HR target kernel 52 may correspond to a target kernel including green pixel G20 as a similar characteristic defective pixel. Since the similar characteristic defective pixel is positioned to the left of the target pixel in the HR target kernel 52, the pixel interpolator 420 may interpolate the target pixel based on the pixel data of similar or dissimilar characteristic pixels positioned at the right part of the HR target kernel 52 in the horizontal direction.

In the HR target kernel 52, the pixel marked with a dashed circle may correspond to the defective pixel, and the pixels marked with solid circles may correspond to pixels used to interpolate the target pixel. When the pixel interpolator 420 interpolates the target pixel with reference to the HR target kernel 52, the pixel data of the target pixel may be calculated using an equation such as Equation 19 or Equation 20 below.

In Equation 19 or Equation 20, the pixel data of the interpolated target pixel may correspond to g22, and the pixel data of a similar characteristic pixel G24 may correspond to g24. Also, the pixel data of dissimilar characteristic pixels B12, B14, B32, and B34 may correspond to b12, b14, b32, and b34, respectively. Also, in the equation, G2 may correspond to a value obtained by dividing the average pixel data of the green pixels included in the HR target kernel 52 by the average pixel data of the blue pixels included in the HR target kernel 52. In one embodiment, G2 may be any set value or a preset threshold.

[Equation 19]

$$g22 = g24 + G2 \times \{(b12 + b32) - (b14 + b34)\} / 2$$

[Equation 20]

$$g22 = g24 \times G2 \times \{(b12 + b32) / (b14 + b34)\}$$

When the target pixel corresponds to the green filter, the similar characteristic defective pixel is positioned under the target pixel, and the pattern determiner 300 determines the target kernel as a vertical pattern, the pixel interpolator 420 may interpolate the target pixel with the reference to the VU target kernel 53.

The VU target kernel 53 may include green pixel G22 as the target pixel, and correspond to a vertical pattern. The VU target kernel 53 may correspond to a target kernel including green pixel G42 as a similar characteristic defective pixel. Since the similar characteristic defective pixel is positioned under the target pixel in the VU target kernel 53, the pixel interpolator 420 may interpolate the target pixel based on the pixel data of similar or dissimilar characteristic pixels positioned at the upper part of the VU target kernel 53 in the vertical direction.

In the VU target kernel 53, the pixel marked with a dashed circle may correspond to the defective pixel, and the pixels marked with solid circles may correspond to pixels used to interpolate the target pixel. When the pixel interpolator 420 interpolates the target pixel with reference to the VU target kernel 53, the pixel data of the target pixel may be calculated using an equation such as Equation 21 or Equation 22 below.

In Equation 21 or Equation 22, the pixel data of the interpolated target pixel may correspond to g22, and the pixel data of a similar characteristic pixel G02 may correspond to g02. Also, the pixel data of dissimilar characteristic pixels R01, R03, R21, and R23 may correspond to r01, r03, r21, and r23, respectively. Also, in the equation, G3 may correspond to a value obtained by dividing the average pixel data of the green pixels included in the VU target kernel 53 by the average pixel data of the red pixels included in the VU target kernel 53. In one embodiment, G3 may be any set value or a preset threshold.

[Equation 21]

$$g22 = g02 + G3 \times \{(r21 + r23) - (r01 + r03)\} / 2$$

[Equation 22]

$$g22 = g02 \times G3 \times \{(r21 + r23) / (r01 + r03)\}$$

When the target pixel corresponds to the green filter, the similar characteristic defective pixel is positioned over the target pixel, and the pattern determiner 300 determines the target kernel as a vertical pattern, the pixel interpolator 420 may interpolate the target pixel with the reference to the VD target kernel 54.

The VD target kernel 54 may include green pixel G22 as the target pixel, and correspond to a vertical pattern. The VD target kernel 54 may correspond to a target kernel including green pixel G02 as a similar characteristic defective pixel. Since the similar characteristic defective pixel is positioned over the target pixel in the VD target kernel 54, the pixel interpolator 420 may interpolate the target pixel based on the pixel data of similar or dissimilar characteristic pixels positioned at the lower part of the VD target kernel 54 in the vertical direction.

In the VD target kernel 54, the pixel marked with a dashed circle may correspond to the defective pixel, and the pixels marked with solid circles may correspond to pixels used to interpolate the target pixel. When the pixel interpolator 420 interpolates the target pixel with reference to the VD target kernel 54, the pixel data of the target pixel may be calculated using an equation such as Equation 23 or Equation 24 below.

In Equation 23 or Equation 24, the pixel data of the interpolated target pixel may correspond to g22, and the pixel data of a similar characteristic pixel G42 may correspond to g42. Also, the pixel data of dissimilar characteristic pixels R21, R23, R41, and R43 may correspond to r21, r23, r41, and r43, respectively. Also, in the equation, G3 may correspond to a value obtained by dividing the average pixel data of the green pixels included in the VD target kernel 54 by the average pixel data of the red pixels included in the VD target kernel 54. In one embodiment, G3 may be any set value or a preset threshold.

[Equation 23]

$$g22 = g42 + G3 \times \{(r21 + r23) - (r41 + r43)\} / 2$$

[Equation 24]

$$g22 = g42 \times G3 \times \{(r21 + r23) / (r41 + r43)\}$$

When the target pixel corresponds to the green filter, the similar characteristic defective pixel is positioned at the bottom left with respect to the target pixel, and the pattern determiner 300 determines the target kernel as a slash-direction pattern, the pixel interpolator 420 may interpolate the target pixel with the reference to the SU target kernel 55.

The SU target kernel 55 may include green pixel G22 as the target pixel, and correspond to a slash-direction pattern. The SU target kernel 55 may correspond to a target kernel including green pixel G31 as a similar characteristic defective pixel. The pixel interpolator 420 may interpolate the target pixel based on the pixel data of similar characteristic pixels positioned on the line along the slash direction within the SU target kernel 55.

In the SU target kernel 55, the pixel marked with a dashed circle may correspond to the defective pixel, and the pixels marked with solid circles may correspond to pixels used to interpolate the target pixel. When the pixel interpolator 420 interpolates the target pixel with reference to the SU target kernel 55, the pixel data of the target pixel may be calculated using an equation such as Equation 25 below.

In Equation 25, the pixel data of the interpolated target pixel may correspond to g22, and the pixel data of the similar characteristic pixels G04, G13, and G40 may correspond to g04, g13, and g40, respectively.

[Equation 25]

$$g22 = g13 + (g40 - g04) / 2$$

In one embodiment, when the target pixel corresponds to the green filter, the similar characteristic defective pixel is positioned at the bottom left of the target pixel, and the pattern determiner 300 determines the target kernel as a slash-direction pattern, the pixel interpolator 420 may interpolate the pixel data of the target pixel based on the average value of the pixel data of the green pixel G04 and the pixel data of the green pixel G40.

When the target pixel corresponds to the green filter, the similar characteristic defective pixel is positioned at the top left of the target pixel, and the pattern determiner 300 determines the target kernel as a slash-direction pattern, the pixel interpolator 420 may interpolate the target pixel with the reference to the SD target kernel 56.

The SD target kernel 56 may include green pixel G22 as the target pixel, and correspond to a slash-direction pattern. The SD target kernel 56 may correspond to a target kernel including green pixel G13 as a similar characteristic defective pixel. The pixel interpolator 420 may interpolate the target pixel based on the pixel data of similar characteristic pixels positioned on the line along the slash direction within the SD target kernel 56.

In the SD target kernel 56, the pixel marked with a dashed circle may correspond to the defective pixel, and the pixels marked with solid circles may correspond to pixels used to interpolate the target pixel. When the pixel interpolator 420 interpolates the target pixel with reference to the SD target kernel 56, the pixel data of the target pixel may be calculated using an equation such as Equation 26 below.

In Equation 26, the pixel data of the interpolated target pixel may correspond to g22, and the pixel data of similar characteristic pixels G04, G31, and G40 may correspond to g04, g31, and g40, respectively.

[Equation 26]

$$g22 = g31 + (g04 - g40) / 2$$

In one embodiment, when the target pixel corresponds to the green filter, the similar characteristic defective pixel is positioned at the top right of the target pixel, and the pattern determiner 300 determines that the target kernel is a slash-direction pattern, the pixel interpolator 420 may interpolate the pixel data of the target pixel based on the average value of the pixel data of the green pixel G04 and the pixel data of the green pixel G40.

When the target pixel corresponds to the green filter, the similar characteristic defective pixel is positioned at the bottom right of the target pixel, and the pattern determiner 300 determines the target kernel as a backslash-direction pattern, the pixel interpolator 420 may interpolate the target pixel with the reference to the BSU target kernel 57.

The BSU target kernel 57 may include green pixel G22 as the target pixel, and correspond to a backslash-direction pattern. The BSU target kernel 57 may correspond to a target kernel including green pixel G33 as a similar characteristic defective pixel. The pixel interpolator 420 may interpolate the target pixel based on the pixel data of similar characteristic pixels positioned on the line along the backslash direction within the BSU target kernel 57.

In the BSU target kernel 57, the pixel marked with a dashed circle may correspond to the defective pixel, and the pixels marked with solid circles may correspond to pixels used to interpolate the target pixel. When the pixel interpolator 420 interpolates the target pixel with reference to the BSU target kernel 57, the pixel data of the target pixel may be calculated using an equation such as Equation 27 below.

In Equation 27, the pixel data of the interpolated target pixel may correspond to g22, and the pixel data of the similar characteristic pixels G00, G11, and G44 correspond to g00, g11, and g44, respectively.

[Equation 27]

$$g22 = g11 + (g44 - g00) / 2$$

In one embodiment, when the target pixel corresponds to the green filter, the similar characteristic defective pixel is positioned at the bottom right of the target pixel, and the pattern determiner 300 determines the target kernel as a backslash-direction pattern, the pixel interpolator 420 may interpolate the pixel data of the target pixel based on the average value of the pixel data of the green pixel G00 and the pixel data of the green pixel G44.

When the target pixel corresponds to the green filter, the similar characteristic defective pixel is positioned at the top left of the target pixel, and the pattern determiner 300 determines the target kernel as a backslash-direction pattern, the pixel interpolator 420 may interpolate the target pixel with the reference to the BSD target kernel 58.

The BSD target kernel 58 may include green pixel G22 as the target pixel, and correspond to a backslash-direction pattern. The BSD target kernel 58 may correspond to a target kernel including green pixel G11 as a similar characteristic defective pixel. The pixel interpolator 420 may interpolate the target pixel based on the pixel data of similar characteristic pixels positioned on the line along the backslash direction of the BSD target kernel 58.

In the BSD target kernel 58, the pixel marked with a dashed circle may correspond to the defective pixel, and the pixels marked with solid circles may correspond to pixels used to interpolate the target pixel. When the pixel interpolator 420 interpolates the target pixel with reference to the BSD target kernel 58, the pixel data of the target pixel may be calculated using an equation such as Equation 28 below.

In Equation 28, the pixel data of the interpolated target pixel may correspond to g22, and the pixel data of similar characteristic pixels G00, G33, and G44 correspond to g00, g33, and g44, respectively.

[Equation 28]

$$g22 = g33 + (g00 - g44) / 2$$

In one embodiment, when the target pixel corresponds to the green filter, the similar characteristic defective pixel is positioned at the top left of the target pixel, and the pattern determiner 300 determines that the target kernel is a backslash-direction pattern, the pixel interpolator 420 may interpolate the pixel data of the target pixel based on the average value of the pixel data of the green pixel G00 and the pixel data of the green pixel G44.

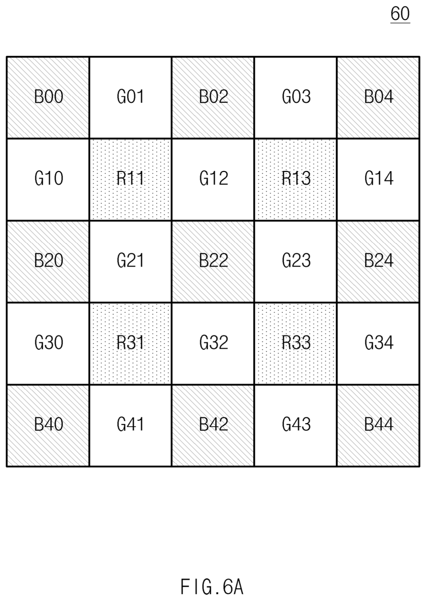

FIG. 6A is a diagram illustrating a target kernel in which a pixel corresponding to a blue filter is positioned at the center.

Referring to FIGS. 1, 2, and 6A, the target pixel may be positioned at the center of the target kernel 60. In one embodiment, the target kernel 60 may include the target pixel, which is blue pixel B22, at the center. In this case, similar characteristic pixels, namely pixels having the same characteristic as the target pixel included in the target kernel 60, may correspond to blue pixels B00, B02, B04, B20, B24, B40, B42, and B44. The red and green pixels included in the target kernel 60 may correspond to dissimilar characteristic pixels.

Accordingly, for the target kernel 60, the defective pixel detector 200 may determine whether each of the similar characteristic pixels, namely blue pixels B00, B02, B04, B20, B24, B40, B42, and B44, is a defective pixel. Pixels determined as similar characteristic pixels by the defective pixel detector 200 may correspond to similar characteristic defective pixels.

Also, for the target kernel 60, the pixel interpolator 420 may interpolate the target pixel based on the pixel data of at least one of the dissimilar characteristic pixels, namely green pixels G01, G03, G10, G12, G14, G21, G23, G30, G32, G34, G41, and G43, and red pixels R11, R13, R31, and R33.

FIG. 6B is a diagram illustrating the operation of an image signal processor when the pixel positioned at the center of the target kernel corresponds to the blue filter according to embodiments of the present disclosure.

Referring to FIGS. 2, 4B, and 6B, when the target pixel corresponds to a blue filter, it may be understood similarly to the case where the target pixel corresponds to a red filter in FIG. 4B. For example, the operation of the pixel interpolator 420 of FIG. 6B interpolating the target pixel with reference to the HL target kernel 61, HR target kernel 62, VU target kernel 63, VD target kernel 64, SU target kernel 65, SD target kernel 66, BSU target kernel 67, or BSD target kernel 68 may be understood similarly to the operation of the pixel interpolator 420 described above with reference to FIG. 4B. When the blue pixels in the target kernels shown in FIG. 6B are matched to red pixels, and the red pixels in the target kernels shown in FIG. 6B are matched to red pixels, the target kernels shown in FIG. 6B may be understood similarly to the target kernels shown in FIG. 4B.

Furthermore, the pixel interpolator 420 of FIG. 6B may interpolate the target pixel in a similar manner with reference to Equations 1 to 16 described above regarding FIG. 4B. Thus, redundant description is skipped.

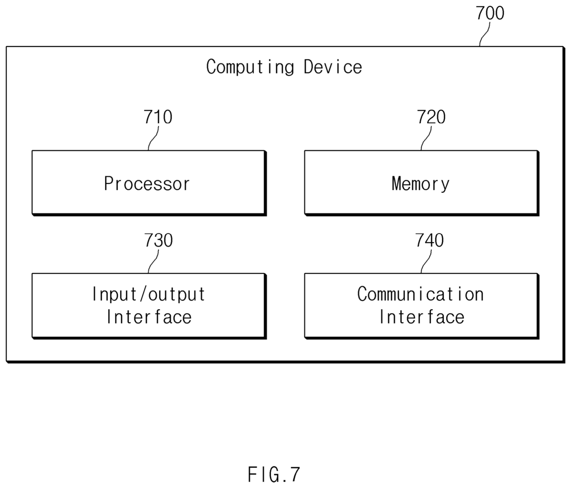

FIG. 7 is a block diagram illustrating a computing device corresponding to the image signal processor of FIG. 1 according to an embodiment of the present disclosure.

Referring to FIG. 7, the computing device 700 may represent an embodiment of a hardware configuration for performing the operation of the image signal processor 100 of FIG. 1.

The computing device 700 may be mounted on a chip that is independent from the chip on which the image sensing device is mounted. According to one embodiment, the chip on which the image sensing device is mounted and the chip on which the computing device 700 is mounted may be implemented in one package, for example, a multi-chip package (MCP), but the scope of the present disclosure is not limited thereto.

Additionally, the internal configuration or arrangement of the computing device 700 and the image sensing device may vary depending on the embodiment. For example, at least a portion of the image sensing device may be included in the computing device 700. Alternatively, at least a portion of the computing device 700 may be included in the image sensing device. In this case, at least a portion of the computing device 700 may be mounted together on a chip on which the image sensing device is mounted.

The computing device 700 may include a processor 710, a memory 720, an input/output (I/O) interface 730, and a communication interface 740.

The processor 710 may process data and/or instructions required to perform the operations of the components of the image signal processor 100 described in FIG. 1. That is, the processor 710 may refer to the image signal processor 100, but the scope of the present disclosure is not limited thereto.

The memory 720 may store data and/or instructions required to perform operations of the components 200 and 300 of the image signal processor 100, and may be accessed by the processor 710. For example, the memory 720 may be volatile memory (e.g., Dynamic Random Access Memory (DRAM), Static Random Access Memory (SRAM), etc.) or non-volatile memory (e.g., Programmable Read Only Memory (PROM), Erasable PROM (EPROM), etc.), EEPROM (Electrically Erasable PROM), flash memory, etc.).

That is, the computer program for performing the operations of the image signal processor 100 described in the present disclosure may be recorded in the memory 720 and executed and processed by the processor 710, thereby implementing the operations of the image signal processor 100.

The input/output (I/O) interface 730 is an interface that connects an external input device (e.g., keyboard, mouse, touch panel, etc.) and/or an external output device (e.g., display) to the processor 710 to allow data to be transmitted and received.

The communication interface 740 is a component capable of transmitting and receiving various data to and from an external device (e.g., an application processor, external memory, etc.), and may be a device that supports wired or wireless communication.

As is apparent from the above description, according to embodiments disclosed in the present disclosure, even when the target pixel and the pixels surrounding the target pixel are defective pixels, the accuracy of correction of the target pixel may be improved by providing criteria for selecting interpolation pixels used to interpolate the pixel data of the target pixel.

The embodiments of the present disclosure may provide a variety of advantageous effects capable of being directly or indirectly recognized by one of ordinary skill in the art.

Those skilled in the art will appreciate that the embodiments of the present disclosure may be carried out in other specific ways than those set forth herein. In addition, claims that are not explicitly presented in the appended claims may be presented in combination as an embodiment or included as a new claim by a subsequent amendment after the application is filed.

Although a number of illustrative embodiments have been described, it should be understood that modifications and enhancements to the disclosed embodiments and other embodiments can be devised based on what is described and/or illustrated in the present disclosure. Furthermore, the embodiments may be combined to form additional embodiments.

**Claims**

1. An image signal processor comprising:

   a defective pixel detector configured to detect a defective pixel from among similar characteristic pixels, the similar characteristic pixels representing pixels having a characteristic a same as a characteristic of a target pixel included in a target kernel;
   a pattern determiner configured to determine a pattern of the target kernel based on pixel data of pixels included in the target kernel when the defective pixel is present; and
   a pixel interpolator configured to interpolate, when the defective pixel is positioned in a texture area of the pattern, the target pixel based on pixel data of pixels positioned in the texture area among dissimilar characteristic pixels and pixel data of pixels positioned in the texture area among the similar characteristic pixels, the dissimilar characteristic pixels representing pixels having a characteristic different from the characteristic of the target pixel.

2. The image signal processor according to claim 1, wherein
   the characteristic includes at least one of a color filter or a channel.

3. The image signal processor according to claim 1, wherein
   when a difference in pixel data between a pixel having greatest pixel data and a pixel having second greatest pixel data among the similar characteristic pixels is greater than or equal to a threshold, the defective pixel detector determines the pixel having the greatest pixel data as the defective pixel.

4. The image signal processor according to claim 1, wherein
   when a difference in pixel data between a pixel having least pixel data and a pixel having second least pixel data among the similar characteristic pixels is greater than or equal to a threshold, the defective pixel detector determines the pixel having the least pixel data as the defective pixel.

5. The image signal processor according to claim 1, wherein
   the pattern determiner determines the pattern based on at least one of first comparison data obtained by comparing the pixel data of the pixels positioned in the texture area, or second comparison data obtained by comparing the pixel data of the pixels positioned in the texture area and pixel data of pixels positioned outside the texture area.

6. The image signal processor according to claim 5, wherein
   the pattern comprises at least one of a horizontal pattern, a vertical pattern, a slash-direction pattern, or a backslash-direction pattern.

7. The image signal processor according to claim 1, wherein
the pixel interpolator interpolates the target pixel based on the pixel data of two pixels among the dissimilar characteristic pixels: a pixel adjacent to a pixel positioned symmetrical to the defective pixel with respect to the target pixel and a pixel adjacent to the target pixel.

8. The image signal processor according to claim 7, wherein
the pixel interpolator interpolates the target pixel based on a value obtained by subtracting the pixel data of the pixel adjacent to the pixel positioned symmetrical to the defective pixel from the pixel data of the pixel adjacent to the target pixel, and a value obtained by adding the pixel data of the pixel positioned symmetrical to the defective pixel to the pixel data of the pixel adjacent to the target pixel.

9. The image signal processor according to claim 7, wherein
the pixel interpolator interpolates the target pixel based on a value obtained by dividing the pixel data of the pixel adjacent to the pixel positioned symmetrical to the defective pixel by the pixel data of the pixel adjacent to the target pixel, and a value obtained by multiplying the pixel data of the pixel positioned symmetrical to the defective pixel by the pixel data of the pixel adjacent to the target pixel.

10. The image signal processor according to claim 1, wherein
the pixel interpolator interpolates the target pixel based on the pixel data of pixels positioned along a direction corresponding to the pattern, centered on the target pixel.

11. The image signal processor according to claim 1, wherein
the target kernel has a monochrome pattern, a quad pattern, a nona pattern, a QxQ pattern, or an RGBW pattern.

12. A method of processing an image signal, the method comprising:

determining a defective pixel from among similar characteristic pixels, the similar characteristic pixels representing pixels having a characteristic a same as a characteristic of a target pixel included in a target kernel;
determining a pattern of the target kernel based on pixel data of pixels included in the target kernel when the defective pixel is present; and
when the defective pixel is positioned in a texture area of the pattern, interpolating the target pixel based on pixel data of pixels positioned in the texture area among dissimilar characteristic pixels and pixel data of pixels positioned in the texture area among the similar characteristic pixels, the dissimilar characteristic pixels representing pixels having a characteristic different from the characteristic of the target pixel.

13. The method according to claim 12, wherein determining the defective pixel includes:
when a difference in pixel data between a pixel having greatest pixel data and a pixel having second greatest pixel data among the similar characteristic pixels is greater than or equal to a threshold, determining the pixel having the greatest pixel data as the defective pixel.

14. The method according to claim 12, wherein determining the pattern includes:
determining the pattern based on at least one of first comparison data obtained by comparing the pixel data of the pixels positioned in the texture area of the pattern, or second comparison data obtained by comparing the pixel data of the pixels positioned in the texture area and pixel data of pixels positioned outside the texture area.

15. The method according to claim 12, wherein interpolating the target pixel includes:
interpolating the target pixel based on the pixel data of two pixels among the dissimilar characteristic pixels: a pixel adjacent to a pixel positioned symmetrical to the defective pixel with respect to the target pixel and a pixel adjacent to the target pixel.

Image Signal Processor 100

IDATA → | Defective Pixel Detector 200 | —DPD→ | Pattern Determiner 300 | —PTD→ | Defective Pixel Corrector 400 | → IDATA_P

FIG.1

Defective Pixel Corrector 400

PTD →

Dissimilar Characteristic Pixel Determiner
410

Gradient Determiner
412

Ratio Determiner
414

↓ UPD

Pixel Interpolator
420

→ IDATA_P

FIG.2

Start

Is defective pixel
present among surrounding similar
characteristic pixels? — S100

No

Yes

Determine kernel pattern — S110

Is defective pixel present
in texture area of pattern? — S120

No

Yes

Interpolate target pixel based on pixel
data of dissimilar characteristic pixels — S130

End

FIG.3

<u>40</u>

| R00 | G01 | R02 | G03 | R04 |
|-----|-----|-----|-----|-----|
| G10 | B11 | G12 | B13 | G14 |
| R20 | G21 | R22 | G23 | R24 |
| G30 | B31 | G32 | B33 | G34 |
| R40 | G41 | R42 | G43 | R44 |

FIG.4A

FIG.4B

50

| | | | | |
|---|---|---|---|---|
| G00 | R01 | G02 | R03 | G04 |
| B10 | G11 | B12 | G13 | B14 |
| G20 | R21 | G22 | R23 | G24 |
| B30 | G31 | B32 | G33 | B34 |
| G40 | R41 | G42 | R43 | G44 |

FIG.5A

EP 4 757 338 A1

51 — HL

| G00 | R01 | G02 | R03 | G04 |
| B10 | G11 | B12 | G13 | B14 |
| G20 | R21 | G22 | R23 | G24 |
| B30 | G31 | B32 | G33 | B34 |
| G40 | R41 | G42 | R43 | G44 |

52 — HR

| G00 | R01 | G02 | R03 | G04 |
| B10 | G11 | B12 | G13 | B14 |
| G20 | R21 | G22 | R23 | G24 |
| B30 | G31 | B32 | G33 | B34 |
| G40 | R41 | G42 | R43 | G44 |

53 — VU

| G00 | R01 | G02 | R03 | G04 |
| B10 | G11 | B12 | G13 | B14 |
| G20 | R21 | G22 | R23 | G24 |
| B30 | G31 | B32 | G33 | B34 |
| G40 | R41 | G42 | R43 | G44 |

54 — VD

| G00 | R01 | G02 | R03 | G04 |
| B10 | G11 | B12 | G13 | B14 |
| G20 | R21 | G22 | R23 | G24 |
| B30 | G31 | B32 | G33 | B34 |
| G40 | R41 | G42 | R43 | G44 |

55 — SU

| G00 | R01 | G02 | R03 | G04 |
| B10 | G11 | B12 | G13 | B14 |
| G20 | R21 | G22 | R23 | G24 |
| B30 | G31 | B32 | G33 | B34 |
| G40 | R41 | G42 | R43 | G44 |

56 — SD

| G00 | R01 | G02 | R03 | G04 |
| B10 | G11 | B12 | G13 | B14 |
| G20 | R21 | G22 | R23 | G24 |
| B30 | G31 | B32 | G33 | B34 |
| G40 | R41 | G42 | R43 | G44 |

57 — BSU

| G00 | R01 | G02 | R03 | G04 |
| B10 | G11 | B12 | G13 | B14 |
| G20 | R21 | G22 | R23 | G24 |
| B30 | G31 | B32 | G33 | B34 |
| G40 | R41 | G42 | R43 | G44 |

58 — BSD

| G00 | R01 | G02 | R03 | G04 |
| B10 | G11 | B12 | G13 | B14 |
| G20 | R21 | G22 | R23 | G24 |
| B30 | G31 | B32 | G33 | B34 |
| G40 | R41 | G42 | R43 | G44 |

FIG.5B

60

| | | | | |
|------|------|------|------|------|
| B00 | G01 | B02 | G03 | B04 |
| G10 | R11 | G12 | R13 | G14 |
| B20 | G21 | B22 | G23 | B24 |
| G30 | R31 | G32 | R33 | G34 |
| B40 | G41 | B42 | G43 | B44 |

FIG.6A

**61** — HL

| B00 | G01 | B02 | G03 | B04 |
|-----|-----|-----|-----|-----|
| G10 | R11 | G12 | R13 | G14 |
| B20 | G21 | B22 | G23 | B24 |
| G30 | R31 | G32 | R33 | G34 |
| B40 | G41 | B42 | G43 | B44 |

**62** — HR

| B00 | G01 | B02 | G03 | B04 |
|-----|-----|-----|-----|-----|
| G10 | R11 | G12 | R13 | G14 |
| B20 | G21 | B22 | G23 | B24 |
| G30 | R31 | G32 | R33 | G34 |
| B40 | G41 | B42 | G43 | B44 |

**63** — VU

| B00 | G01 | B02 | G03 | B04 |
|-----|-----|-----|-----|-----|
| G10 | R11 | G12 | R13 | G14 |
| B20 | G21 | B22 | G23 | B24 |
| G30 | R31 | G32 | R33 | G34 |
| B40 | G41 | B42 | G43 | B44 |

**64** — VD

| B00 | G01 | B02 | G03 | B04 |
|-----|-----|-----|-----|-----|
| G10 | R11 | G12 | R13 | G14 |
| B20 | G21 | B22 | G23 | B24 |
| G30 | R31 | G32 | R33 | G34 |
| B40 | G41 | B42 | G43 | B44 |

**65** — SU

| B00 | G01 | B02 | G03 | B04 |
|-----|-----|-----|-----|-----|
| G10 | R11 | G12 | R13 | G14 |
| B20 | G21 | B22 | G23 | B24 |
| G30 | R31 | G32 | R33 | G34 |
| B40 | G41 | B42 | G43 | B44 |

**66** — SD

| B00 | G01 | B02 | G03 | B04 |
|-----|-----|-----|-----|-----|
| G10 | R11 | G12 | R13 | G14 |
| B20 | G21 | B22 | G23 | B24 |
| G30 | R31 | G32 | R33 | G34 |
| B40 | G41 | B42 | G43 | B44 |

**67** — BSU

| B00 | G01 | B02 | G03 | B04 |
|-----|-----|-----|-----|-----|
| G10 | R11 | G12 | R13 | G14 |
| B20 | G21 | B22 | G23 | B24 |
| G30 | R31 | G32 | R33 | G34 |
| B40 | G41 | B42 | G43 | B44 |

**68** — BSD

| B00 | G01 | B02 | G03 | B04 |
|-----|-----|-----|-----|-----|
| G10 | R11 | G12 | R13 | G14 |
| B20 | G21 | B22 | G23 | B24 |
| G30 | R31 | G32 | R33 | G34 |
| B40 | G41 | B42 | G43 | B44 |

FIG.6B

700

Computing Device

710

Processor

720

Memory

730

Input/output
Interface

740

Communication
Interface

FIG.7

Europäisches
Patentamt
European
Patent Office
Office européen
des brevets

# EUROPEAN SEARCH REPORT

**Application Number**

EP 25 21 5920

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/336684 A1 (WANG JING [US] ET AL) 22 October 2020 (2020-10-22) * paragraphs [0005], [0016] - [0020], [0070] - [0087]; figures 3, 11-13 * | 1-15 | INV. H04N25/683 H04N25/13 |
| X | JP 4 985403 B2 (NIKON CORP) 25 July 2012 (2012-07-25) * paragraph [0008]; figures 3-5 * | 1,12 | |
| X | KR 2007 0070674 A (MTEK VISION CO LTD [KR]) 4 July 2007 (2007-07-04) * claim 2 * | 1,12 | |
| A | US 2024/305901 A1 (SWAMI SARVESH [US]) 12 September 2024 (2024-09-12) * paragraphs [0057], [0135] - [0141]; figures 14-16 * | 1-15 | |
| A | US 2024/265672 A1 (JANG CHEOL JON [KR] ET AL) 8 August 2024 (2024-08-08) * paragraph [0085]; figures 1, 4-9 * | 1-15 | |

TECHNICAL FIELDS SEARCHED (IPC)

H04N

The present search report has been drawn up for all claims

| Place of search | Date of completion of the search | Examiner |
|---|---|---|
| Munich | 12 March 2026 | Trimeche, Mejdi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 5920

This annex lists the patent family members relating to the patent documents cited in  the above-mentioned European search report.
The members are as contained in the European Patent Office EDP file on
The European Patent Office is in no way liable for these particulars which are merely given for the purpose of information.

12-03-2026

| Patent document cited in search report | | Publication date | Patent family member(s) | | Publication date |
|---|---|---|---|---|---|
| US 2020336684 | A1 | 22-10-2020 | NONE | | |
| JP 4985403 | B2 | 25-07-2012 | JP | 4985403 B2 | 25-07-2012 |
| | | | JP | WO2007023817 A1 | 26-02-2009 |
| | | | US | 2009079853 A1 | 26-03-2009 |
| | | | WO | 2007023817 A1 | 01-03-2007 |
| KR 20070070674 | A | 04-07-2007 | NONE | | |
| US 2024305901 | A1 | 12-09-2024 | NONE | | |
| US 2024265672 | A1 | 08-08-2024 | CN | 118469807 A | 09-08-2024 |
| | | | KR | 20240123925 A | 16-08-2024 |
| | | | US | 2024265672 A1 | 08-08-2024 |